# EUROPÄISCHE PATENTSCHRIFT

(11) **EP 1 966 631 B1**
(45) Veröffentlichungstag und Bekanntmachung des Hinweises auf die Patenterteilung: **27.07.2016**
(21) Anmeldenummer: 06807651.2
(22) Anmeldetag: 30.10.2006
(51) Int. Cl.: G01S 17/46, G01S 17/87, G01S 17/93, G01S 13/93

(54) **VORRICHTUNG ZUR DETEKTION EINES OBJEKTS**
APPARATUS FOR DETECTING AN OBJECT
DISPOSITIF POUR LA DETECTION D'UN OBJET

(30) Priorität: 19.12.2005 DE 102005060653
(43) Veröffentlichungstag der Anmeldung: 10.09.2008
(73) Patentinhaber: ROBERT BOSCH GMBH, 70442 Stuttgart (DE)
(72) Erfinder: ZIMMERMANN, Uwe, 71686 Remseck (DE); EWERHART, Frank, 74189 Weinsberg (DE)
(86) Internationale Anmeldenummer: PCT/EP2006/067922
(87) Internationale Veröffentlichungsnummer: WO 2007/071484

(56) Entgegenhaltungen:
- EP-A2- 1 361 118
- WO-A-2005/001792
- DE-A1- 19 845 568
- DE-A1- 19 949 409
- US-A- 5 463 384
- US-A1- 2005 278 098

## Beschreibung

### Stand der Technik

Die Erfindung betrifft eine Vorrichtung zur Detektion eines Objekts nach der Gattung des unabhängigen Patentanspruchs.

Aus US 2002/0027339 A1 ist bereits eine Umfeldsensorik bekannt, die vor einem Aufprall Informationen über das Aufprallobjekt auf das Fahrzeug liefern soll. Dabei kann ein optisches Lasersystem verwendet werden. Der Laser kann dabei entweder in einem Abtastmodus verwendet werden, oder es kann ein äußerst aufgeweiteter Lichtkegel verwendet werden, beispielsweise durch die Verwendung von Linsen.

Aus US 5,463,384 ist ein Kollisionsvermeidungssystem bekannt, bei dem in einem Seitenbereich des Fahrzeugs ein Objekt erkannt werden kann durch eine Detektionseinheit, die eine Vielzahl von Strahlen von Infrarotenergie abgibt und über die Reflektion von Objekten diese detektiert. Die Detektionseinheit weist Module auf mit Paaren von lichtimitierenden Dioden und Fotodetektoren. Aus DE 199 49 499 A1 sind ein Verfahren und eine Vorrichtung zur Objektdetektierung bekannt, bei denen wenigstens zwei an einem Fahrzeug angebrachte abstandsauflösende Sensoren, deren Detektionsbereiche sich wenigstens teilweise überlappen, vorgesehen sind. Die Relativposition möglicher Objekte bezüglich der Sensoren im Überlappungsbereich wird nach dem Triangulationsprinzip bestimmt, wobei mögliche Scheinobjekte, die durch die Objektbestimmung bestehen, durch dynamische Objektbeobachtungen ermittelt werden. Aus DE 198 45 568 A1 ist eine Vorrichtung zur Objekterfassung für Kraftfahrzeuge bekannt. Dabei wird das Objekt umfassend eine Vielzahl von Abstandssensoren vorgesehen, die derart an einem Kraftfahrzeug angeordnet sind, dass diese die Umgebung des Kraftfahrzeugs abtasten und eine Auswerteeinheit, die aus den Daten der Abstandssensorik die Bewegungsbahn und die Geschwindigkeit eines Objekts relativ zu dem Kraftfahrzeug ermittelt. Die Abstandssensoren sind wahlweise durch die Auswerteeinheit ansteuerbar und die Reichweite und/oder die Messwiederholfrequenz und/oder Auflösung und/oder Betriebsart der Abstandssensoren veränderbar.

Aus der EP 1 361 118 A2 ist eine Vorrichtung zum Betreiben eines Fahrzeugs bekannt, welche eine Mehrzahl von in der äußeren Peripherie des Fahrzeugs angebrachten Abstandssensoren aufweist, die ein Zielobjekt, insbesondere ein anderes Fahrzeug erfassen können. Wenn ein Zielobjekt, insbesondere ein anderes Fahrzeug in einer vorbestimmten Gefahrenzone erfasst wird, wird eine Warnung an den Fahrer ausgegeben.

### Offenbarung der Erfindung

Die erfindungsgemäße Vorrichtung zur Detektion eines Objekts hat dem gegenüber den Vorteil, dass durch die Verwendung von wenigstens drei Sektoren durch die Umfeldsensorik in einfacher Weise sich beispielsweise Entfernungen und Relativgeschwindigkeiten sehr genau bestimmen lassen. Insbesondere ist diese Konfiguration der Umfeldsensorik mit einem im Wesentlichen senkrecht zur Fahrzeugseite ausgerichteten Sektor sowie jeweils schräg nach vorne bzw. schräg nach hinten ausgerichteten Sektoren äußerst kostengünstig. Dabei sollte der Sektor, der senkrecht zur Fahrzeugseite ausgerichtet ist, so gewählt werden, dass mindestens eine vollständige Abdeckung der Fahrzeugseite erfolgt. Die jeweils schräg nach vorne bzw. schräg nach hinten ausgerichteten Sektoren können sich mit dem senkrecht zur Fahrzeugseite ausgerichteten Sektor überschneiden und können vorzugsweise zu einer Grobschätzung eines Crash-Offsets benutzt werden.

Die Grundidee der Konfiguration der Umfeldsensorik besteht darin, dass sich Entfernungen und Relativgeschwindigkeiten mit mehrstrahligen Umfeldsensoriken, vorzugsweise Lidar-Systemen, dann möglichst genau bestimmen lassen, wenn die Strahlorientierung möglichst senkrecht zum Objekt ausgerichtet ist. Die Minimalkonfiguration besteht demnach aus drei Strahlen bzw. Sektoren für den Front-, Heck- und Mittelbereich des Fahrzeugs.

Die Auswerteschaltung kann in die Umfeldsensorik integriert sein oder auch in einem anderen Steuergerät, beispielsweise in einem Airbagsteuergerät sich befinden. Es ist auch möglich, dass die Auswerteschaltung verteilt auf mehrere Geräte ist, sodass die Auswertung zum Teil beispielsweise in der Umfeldsensorik und zum Teil in einem Steuergerät erfolgt.

Durch die in den abhängigen Ansprüchen aufgeführten Maßnahmen und Weiterbildungen sind vorteilhafte Verbesserungen der im unabhängigen Patentanspruch angegebenen Vorrichtung zur Detektion eines Objekts möglich.

Vorzugsweise weist die Umfeldsensorik ein Lidar-System auf, das die drei Sektoren durch drei Strahlen abdeckt. Es ist möglich, dass mehr als drei Strahlen verwendet werden, was zu einer genaueren Bestimmung der ausgewerteten Parameter, die das Aufprallobjekt charakterisieren, führt.

Von Vorteil ist dabei, dass die Auswerteschaltung in Abhängigkeit von dem Signal der Umfeldsensorik eine Zeit bis zum Aufprall des Objekts auf das Fahrzeug und einer Aufprallgeschwindigkeit bestimmt. Damit können dann vorteilhafter Weise frühzeitig und präzise Personenschutzmittel wie Seitenairbags ausgelöst werden. Auch andere Maßnahmen bei einem Seitenaufprall, die den Sitz betreffen können hier dann frühzeitig ausgelöst werden. Unter dem Begriff Signal wird hier eine Zusammenfassung der einzelnen Signale, die durch die mindestens drei Sektoren erzeugt werden, verstanden.

Es ist weiterhin von Vorteil, dass die Auswerteschaltung derart konfiguriert ist, dass sie einen Vorbeifahrabstand des Objekts, einen Aufprallwinkel, einen Crash-Offset und/oder einen Vorbeifahrwinkel bestimmt. Dies sind wichtige Parameter, die die Vorrichtung zur Detektion eines Objekts anderen Systemen zur Verfügung stellen kann, wie einem Personenschutzsystem oder einer Parklückenvermessung oder einem Spurwechselassistent. Mit diesen Systemen ist die Vorrichtung vorzugsweise koppelbar.

### Zeichnung

Ausführungsbeispiele der Erfindung sind in der Zeichnung dargestellt und werden in der nachfolgenden Beschreibung näher erläutert. Es zeigen:
- Figur 1: die Sensorkonfiguration der Umfeldsensorik mit verschiedenen Objekten,
- Figur 2: ein Blockschaltbild,
- Figur 3: einen Abstands-Zeit-Verlauf und
- Figur 4: eine Situation zur Erläuterung der Crashwinkelbestimmung.

### Beschreibung

Zunehmend werden Umfeldsensoriken wie Video, Radar, Lidar oder Ultraschall verwendet, um das Umfeld um ein Fahrzeug zu charakterisieren und in Abhängigkeit von dieser Charakterisierung Maßnahmen einzuleiten, die das Fahren sicherer und bequemer gestalten. Erfindungsgemäß wird vorgeschlagen, eine Umfeldsensorik in der jeweiligen Fahrzeugseite, das heißt an beiden Fahrzeugseiten anzuordnen, erfindungsgemäß im Bereich der B-Säule, wobei diese Umfeldsensorik wenigstens drei Sektoren im Umfeld abdeckt, wobei der erste Sektor senkrecht zur Fahrzeugseite ausgerichtet ist und damit ein großes Umfeld an der Fahrzeugseite abdeckt und die anderen beiden Sektoren jeweils schräg nach vorne und nach hinten ausgerichtet sind, um bereits eine Grobschätzung von in die Sektoren eindringende Objekten zu liefern.

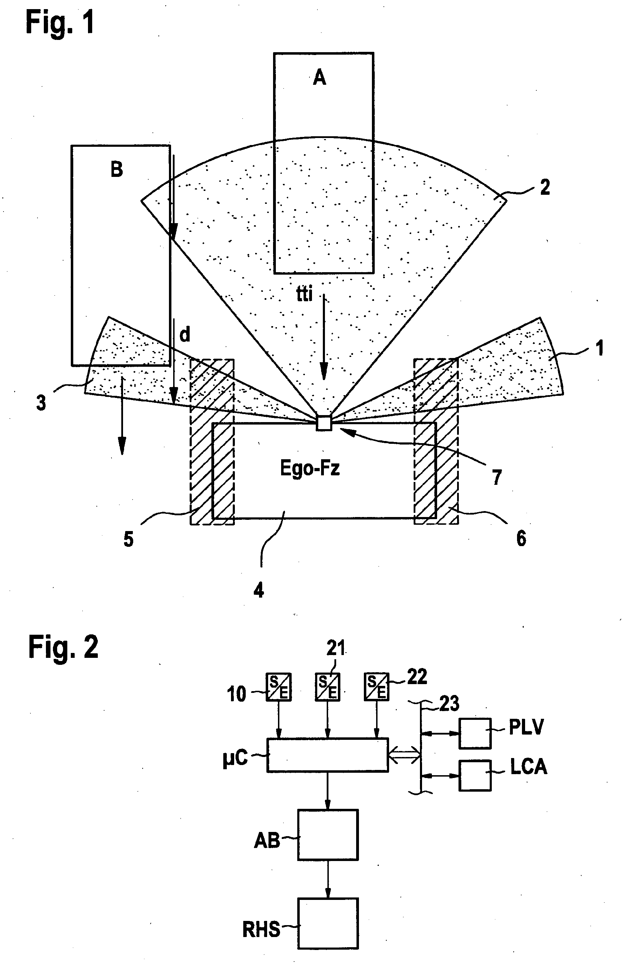

Figur 1 zeigt ein Ausführungsbeispiel der Umfeldsensorik mit der erfindungsgemäßen Konfiguration. Objekt A ist ein Fahrzeug, das auf das Fahrzeug 4, das die erfindungsgemäße Umfeldsensorik aufweist, durch seine Fahrrichtung 2 direkt zentral auf das eigene Fahrzeug treffen wird. Dies ist der gefährlichste Aufprall, da bei einem Seitenaufprall die Knautschzone äußerst gering ist und das Verletzungsrisiko für die Fahrzeuginsassen daher besonders hoch ist. Fahrzeug A befindet sich also im Sektor 2, der also im Wesentlichen senkrecht zur Fahrzeugseite des Fahrzeugs 4 ausgerichtet ist. Da hier ein senkrechter Aufprall auf die Fahrzeugseite zu erwarten ist, ist eine möglichst genaue Bestimmung der Auftreffgeschwindigkeit bzw. der Zeit bis zum Aufprall im Zentralbereich des Fahrzeugs notwendig, um im Türbereich des Fahrzeugs die Seitenairbags rechtzeitig zünden zu können. Vorliegend wird ein Lidar-System verwendet. Die Aufprallgeschwindigkeit bzw. die Zeit bis zum Auftreffen auf das Fahrzeug kann mit hoher Genauigkeit, beispielsweise aus der zeitlichen Ableitung des Abstandsverlaufs, bestimmt werden. Beispielsweise kann in gepulsten Lidar-Systemen die Bestimmung von Abständen mittels dem Laufzeitverfahren erfolgen, beispielsweise direkt durch Start eines A/D-Wandlers bei Aussendung des Pulses und Abtastung des Rückstreusignals oder indirekt über ein Zeitdehnungsverfahren (Boxcar). In triangulierenden Systemen kann die Abstandsbestimmung geometrisch erfolgen, beispielsweise mittels eines PSD (Position Sensitive Device) oder einer Empfangsdiodenzeile.

Das Objekt B wird an dem Fahrzeug 4 vorbeifahren. Hier ist eine möglichst genaue Bestimmung des Vorbeifahrabstands bzw. eines Crash-Offsets am Rande des Fahrzeugs 4 notwendig, um entscheiden zu können, ob eine Kollision tatsächlich stattfindet oder ob das Kollisionsobjekt knapp vor oder hinter dem eigenen Fahrzeug vorbeifährt. Der Bereich, in dem die Messung des Vorbeifahrabstands bzw. des Crash-Offsets mit hoher Genauigkeit gemessen werden muss, ist gestrichelt gezeichnet. Dies ist durch den Sektor 5 bzw. auch 6 gekennzeichnet. Im Sektor 3 wird eine genaue Bestimmung des Crash-Offsets dadurch möglich, dass auch in diesem Fall die Abstandsmessung möglichst in Längsrichtung des Sektors erfolgen kann, wo die Abstandsmessung am genauesten ist. Der Sektor 3 ist demnach so auszulegen, dass kurz nach Eintritt von Fahrzeug B in diesen Sektor 3 eine Entscheidung darüber fallen kann, ob ein Crash erfolgt oder nicht. Fahrzeug B durchdringt sowohl den Sektor 2 als auch den Sektor 3, sodass dadurch eine Vorausschätzung bereits möglich wird.

Figur zeigt in einem Blockschaltbild die erfindungsgemäße Vorrichtung. Drei Sende-Empfangseinrichtungen, hier für Lidar konfiguriert, 20, 21, 22 liefern ihre Signale an einen Mikrocontroller µC als die Auswerteschaltung. Der Mikrocontroller µC kann in einem Gehäuse mit den Sende-Empfangseinheiten 20, 21, 22 angeordnet sein oder in einem eigenen Gehäuse. Schnittstellenbausteine und andere zusätzliche notwendige Bausteine sind hier der Einfachheit halber weggelassen worden. Die Sende-Empfangseinheiten senden beispielsweise Laserlicht, beispielsweise im Infrarotbereich aus und empfangen reflektiertes Licht. Bei Lidar gebräuchliche Methoden zur Abstandsbestimmung sind direkte (Laufzeitmessung) oder indirekte Verfahren (Zeitdehnungsverfahren) sowie geometrische Verfahren (Triangulation). Der Mikrocontroller µC wertet die Messsignale, die hier insgesamt als Signal aufgefasst werden, der Sende-Empfangseinheiten 20, 21, 22 aus. In Abhängigkeit davon bestimmt der Mikrocontroller µC Parameter wie die Aufprallgeschwindigkeit oder die Zeit, die das Objekt noch benötigt, um auf das Fahrzeug aufzutreffen. Auch Vorbeifahrwinkel, Crashwinkel oder Vorbeifahrabstand können hier bestimmt werden. Diese Parameter werden dann vom Mikrocontroller µC anderen Fahrzeugsystemen zur Verfügung gestellt, sodass diese Fahrzeugsystem mittels dieser Parameter Schutzmittel wie Rückhaltemittel RHS ansteuern können oder Fahrerassistenzsysteme können den Fahrer anhand dieser Parameter unterstützen, um bestimmte Aktionen wie das Parken zu erleichtern. Dazu ist der Mikrocontroller µC über einen nicht dargestellten Buscontroller, der auch in dem Mikrocontroller µC integriert sein kann, beispielsweise über einen CAN-Bus 23 mit einer Parklückenvermessung PLV und einer Spurwechselassistenz LCA verbunden. Auch diese Komponenten weisen einen Buscontroller zur Kommunikation beispielsweise über den CAN-Bus 23 auf. Über eine Datenleitung ist der Mikrocontroller µC mit einem Airbagsteuergerät AB verbunden, das die Rückhaltemittel RHS wie Airbags, Gurtstraffer, Überrollbügel; Seitenwangen oder Kopfstützen ansteuert.

### Berechnung Offset (Fig. 1)

Für die Berechnung des Offsets wird der Radialabstand des Objekts in Sektor 1 bzw. 3 gemessen. Da die Strahlen 1 und 3 relativ schmal sind und etwa in Fahrzeuglängsrichtung ausgerichtet sind, ist der Radialabstand d₁ näherungsweise der Offset. Mit Kenntnis der Strahlgeometrie (Winkel α) der Sektoren 1 bzw. 3 kann aus der erstmaligen Messung des Objekts nach Eintritt in den Sektor ein genauerer Wert des Offsets berechnet werden.

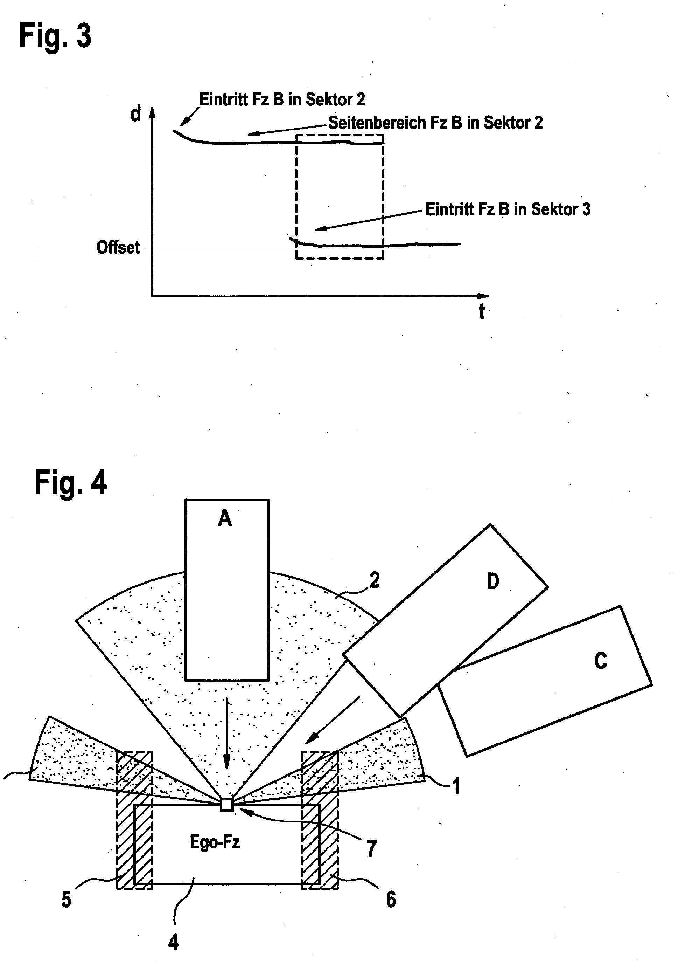

Fig. 3 zeigt einen Abstands-Zeit-Verlauf für Fahrzeug B bei Durchfahren von Sektor 2 und Sektor 3. Aus dem radialen Abstand d in Sektor 3 wird der Offset bestimmt.

### Bestimmung Crashwinkel (Fig. 4)

Die Richtung, aus der das Kollisionsobjekt auf das Ego-Fz zukommt, lässt sich aus der Reihenfolge ableiten, in der das Objekt in den einzelnen Sektoren detektiert wird:
- Detektion in Sektor 2, bei geringer Entfernung dann Detektion in Sektor 1 (und/oder Sektor 3): Kollision aus stumpfem Winkel (Fahrzeug A)
- Erst Sektor 1 (bzw. Sektor 3) und dann Sektor 2 (oder nur Detektion in Sektor 1 (bzw. 3): Kollision aus spitzem Winkel (Fahrzeug C),
- Bei Detektion in Sektor 2 und 1 (bzw.3) etwa in gleicher Entfernung: Kollision aus Richtung der Sektorgrenzen.

Die Datenkommunikation zum Mikrocontroller µC kann unidirektional vorgenommen werden. Auch ein Multiplexen der Signale an dem Mikrocontroller µC ist möglich.

## Patentansprüche

1. Vorrichtung zur Detektion eines Objekts (A, B) mit:
- einer Umfeldsensorik (7), die in einer Fahrzeugseite eines Fahrzeugs (4) eingebaut ist, wobei die Umfeldsensorik (7) ein Lidar-System aufweist, das aus drei Sende- und Empfangseinheiten (20, 21, 22) gebildet ist, die dazu ausgebildet sind, drei Sektoren (1, 2, 3) im Umfeld des Fahrzeugs (4) zu erfassen und wobei die Umfeldsensorik (7) in Abhängigkeit von Daten aus den drei Sektoren (1, 2, 3) ein Signal erzeugt, sowie
- einer Auswerteschaltung (µC), die in Abhängigkeit von dem Signal das Objekt (A, B) detektiert,
wobei ein erster Sektor (2) der Sektoren (1,2,3) senkrecht zur Fahrzeugseite ausgerichtet ist,
**dadurch gekennzeichnet, dass**
die drei Sende- und Empfangseinheiten (20, 21, 22) der Umfeldsensorik (7) in einem Gehäuse im Bereich der B-Säule angeordnet sind, wobei der erste Sektor (2) so gewählt ist, dass eine vollständige Abdeckung der Fahrzeugseite erfolgt, ein zweiter Sektor (3) der Sektoren (1,2,3) im Wesentlichen schräg nach vorne ausgerichtet ist und ein dritter Sektor (1) der Sektoren (1,2,3) im Wesentlichen schräg nach hinten ausgerichtet ist, wobei die Auswerteschaltung (µC) in Abhängigkeit von dem Signal eine Zeit bis zum Aufprall des Objekts (A, B) auf das Fahrzeug (4), eine Aufprallgeschwindigkeit oder einen Aufprallwinkel bestimmt.

2. Vorrichtung nach einem der vorherigen Ansprüche, **dadurch gekennzeichnet, dass** die Vorrichtung derart mit einer Spurwechselassistenz (LCA) koppelbar ist, dass die Spurwechselassistenz (LCA) in Abhängigkeit von dem Signal einen Fahrer des Fahrzeugs beim Spurwechsel unterstützt.

3. Vorrichtung nach einem der vorherigen Ansprüche, **dadurch gekennzeichnet, dass** die Vorrichtung derart mit einer Parklückenvermessung (PLV) koppelbar ist, dass die Parklückenvermessung (PLV) den Fahrer beim Einparken in Abhängigkeit von dem Signal unterstützt.

## Claims

1. Apparatus for detecting an object (A, B), having:
- an environment sensor system (7) which is installed in a side of a vehicle (4), the environment sensor system (7) having a lidar system formed from three transmitting and receiving units (20, 21, 22) which are designed to sense three sectors (1, 2, 3) in the environment of the vehicle (4), and the environment sensor system (7) generating a signal on the basis of data from the three sectors (1, 2, 3) and
- an evaluation circuit (µC) which detects the object (A, B) on the basis of the signal,
a first sector (2) of the sectors (1, 2, 3) being oriented perpendicular to the vehicle side, **characterized in that**
the three transmitting and receiving units (20, 21, 22) of the environment sensor system (7) are arranged in a housing in the region of the B-pillar, the first sector (2) being selected in such a manner that the vehicle side is completely covered, a second sector (3) of the sectors (1, 2, 3) being oriented substantially obliquely forwards, and a third sector (1) of the sectors (1, 2, 3) being oriented substantially obliquely backwards, the evaluation circuit (µC) determining a time until the object (A, B) impacts the vehicle (4), an impact speed or an impact angle on the basis of the signal.

2. Apparatus according to one of the preceding claims, **characterized in that** the apparatus can be coupled to lane change assistance (LCA) in such a manner that the lane change assistance (LCA) assists a driver of the vehicle when changing lanes on the basis of the signal.

3. Apparatus according to one of the preceding claims, **characterized in that** the apparatus can be coupled to a parking space measurement (PLV) in such a manner that the parking space measurement (PLV) assists the driver during parking on the basis of the signal.

## Revendications

1. Dispositif de détection d'un objet (A, B), comprenant :
- un système de détection environnemental (7) qui est installé dans un côté de véhicule d'un véhicule (4), le système de détection environnemental (7) possédant un système Lidar qui est constitué de trois unités d'émission et de réception (20, 21, 22), lesquelles sont configurées pour balayer trois secteurs (1, 2, 3) dans l'environnement du véhicule (4), et le système de détection environnemental (7) générant un signal en fonction des données provenant des trois secteurs (1, 2, 3), ainsi que
- un circuit d'interprétation (µC) qui détecte l'objet (A, B) en fonction du signal,
un premier secteur (2) des secteurs (1, 2, 3) étant orienté perpendiculairement au côté de véhicule, **caractérisé en ce que**
les trois unités d'émission et de réception (20, 21, 22) du système de détection environnemental (7) sont disposées dans un boîtier dans la zone du montant central, le premier secteur (2) étant choisi de telle sorte qu'une couverture complète du côté du véhicule est effectuée, un deuxième secteur (3) des secteurs (1, 2, 3) étant orienté sensiblement en biais vers l'avant et un troisième secteur (1) des secteurs (1, 2, 3) étant orienté sensiblement en biais vers l'arrière, le circuit d'interprétation (µC) déterminant une durée jusqu'à la collision de l'objet (A, B) sur le véhicule (4), une vitesse de collision ou un angle de collision en fonction du signal.

2. Dispositif selon l'une des revendications précédentes, **caractérisé en ce que** le dispositif peut être connecté à un assistant de changement de voie (LCA) de telle sorte que l'assistant de changement de voie (LCA) assiste un conducteur du véhicule lors du changement de voie en fonction du signal.

3. Dispositif selon l'une des revendications précédentes, **caractérisé en ce que** le dispositif peut être connecté à un système de mesure d'emplacement de stationnement (PLV) de telle sorte que le système de mesure d'emplacement de stationnement (PLV) assiste le conducteur lors de l'entrée en stationnement en fonction du signal.
